# EUROPÄISCHE PATENTSCHRIFT

(11) **EP 0 372 314 B1**
(45) Veröffentlichungstag und Bekanntmachung des Hinweises auf die Patenterteilung: **18.05.1994**
(21) Anmeldenummer: 89121711.9
(22) Anmeldetag: 24.11.1989
(51) Int. Cl.: B65G 47/252

(54) **Vorrichtung zum Wenden einer Packung**
Device for turning over a package
Dispositif pour le retournement d'un emballage

(30) Priorität: 07.12.1988 DE 3841171
(43) Veröffentlichungstag der Anmeldung: 13.06.1990
(73) Patentinhaber: Tetra Laval Holdings & Finance SA, 1009 Pully (CH)
(72) Erfinder: Georgitsis, Nikolaos, D-6144 Zwingenberg (DE); Waschatko, Walter, D-6506 Nackenheim (DE)
(74) Vertreter: Weber, Dieter, Dr.

(56) Entgegenhaltungen:
- FR-A- 2 106 472
- NL-A- 7 016 266
- US-A- 2 643 778

## Beschreibung

Die Erfindung betrifft eine Vorrichtung zum Wenden eines Gegenstandes, insbesondere einer Packung, zwischen einer ersten Position auf einem Zuförderer und einer zweiten Position auf einem Abförderer, wobei ein am Boden befestigter Rahmen zur Halterung einer mit einem Antriebsmotor versehenen Bewegungseinrichtung vorgesehen ist, die einen zwischen den zwei Positionen angetriebenen, beweglichen Linearschlitten und eine Kulissenführung mit Steuerkurve aufweist, und wobei ein Greiferelement mittels einer Welle drehbar im Linearschlitten gelagert und fest mit einer in der Steuerkurve geführten Kurvenrolle verbunden ist, wobei die sich zwischen den zwei Positionen erstreckende Steuerkurve wenigstens einen ausgebogenen Abschnitt zur Vorgabe einer stetigen Kurve für ein kontinuierliches Wenden der Packung aufweist, die Kurvenrolle drehbar an einem Rollenarm gelagert ist, der fest mit der am Greiferelement angebrachten Welle verbunden ist, und wobei der ausgebogene Abschnitt der stetigen Steuerkurve einen Bereich hat, der von einer durch zwei den beiden Positionen entsprechende Punkte gelegten, geraden Linie einen längsten Abstand hat, welcher im wesentlichen gleich der Länge des Rollenarmes ist (NL-A-7016266).

Bekannt sind Packungsherstellungsmaschinen, in denen Flüssigkeitspackungen hergestellt, gefüllt, geschlossen und abgefördert werden. Von solchen Maschinen werden Packungen erstellt, welche tubusförmige Seitenwandungen, einen Deckel und einen Boden haben, wobei wenigstens die Seitenwandungen und häufig auch der Boden aus mit Kunststoff beschichtetem Trägermaterial bestehen, damit die Packung flüssigkeitsdicht ist. Mit solchen Maschinen können im Querschnitt runde oder viereckige Packungen hergestellt werden, wobei auch schon eine Packung hergestellt wurde, die am Boden viereckig und im Querschnitt am Deckel rund ist. Boden und Deckel haben bei machen Packungen unterschiedliche Gestalt, Ausführung, Anordnung und gegebenenfalls auch Material. So kann beispielsweise der Boden durch Falten von mit Kunststoff beschichtetem Trägermaterial bestehen, für welches im folgenden im allgemeinen beschichtetes Papier geschrieben wird, während der Deckel aus Kunststoff ohne Trägermaterial angespritzt sein kann.

Es ist bekannt, daß eine Packung der vorstehend beschriebenen Art nach Verlassen der Herstellungsmaschine auf dem Deckel steht und in dieser Position über den hier sogenannten Zuförderer transportiert wird. Für die Lagerung, den Transport und das Anbieten für den Endverbraucher sollen diese Einzelpackungen häufig in einem Sammelgebinde zusammengefaßt werden, wobei verständlicherweise der Deckel oben angeordnet sein soll.

Eine Wendevorrichtung, wie sie eingangs angedeutet ist, ist aus der NL-A-7,016,266 bekannt. Besonders nachteilig sind bei dieser bekannten Drehbewegung die hohen auftretenden Verzögerungen und Beschleunigungen. Weiterhin sind bei der bekannten Vorrichtung aufwendige Weichen erforderlich.

Aufgabe der Erfindung ist es daher, eine Vorrichtung der eingangs genannten Art dahingehend zu verbessern, daß die vorgenannten Nachteile vermieden werden können.

Es sind zwar schon Wendevorrichtungen ähnlicher Art vorgeschlagen worden, bei diesen wird aber die Packung nach seitlichem Verschieben von einem Förderband herunter zum Kippen und Rutschen gebracht, wodurch häufig ein schiefes Aufliegen auf dem Abförderer derart in Kauf genommen werden mußte, daß Packungen sich dann verklemmen oder ganze Gruppen von Packungen durch Blockieren in Klemmeingriff mit Führungseinrichtungen bringen. Bisweilen können Packungen bei dieser Art von Umwenden sogar aufplatzen, was bei einem Abfüllbetrieb, z.B. in einer Molkerei bei der Herstellung von Milchverpackungen, sehr unerwünscht ist.

Erfindungsgemäß wird die Aufgabe zur Schaffung der neuen Vorrichtung dadurch gelöst, daß der Linearschlitten eine von der Steuerkurve für die Kurvenrolle unabhängige Geradführung aufweist und daß der ausgebogene Abschnitt der Steuerkurve eine im wesentlichen stetige Ableitung hat und im Bereich mit dem längsten Abstand eine Tangente aufweist, die parallel zur Verbindungslinie zwischen Anfangs- und Endposition des Linearschlittens verläuft.

Durch die separate Ausgestaltung und Anordnung der Steuerkurve für die Kurvenrolle einerseits und der Geradführung für den Linearschlitten andererseits sind besondere Weichen oder dergleichen bewegliche Führungsteile nicht mehr erforderlich. Dadurch wird die Vorrichtung robuster und zuverlässiger, und die Herstellung der gesamten Vorrichtung ist wirtschaftlicher zu bewerkstelligen.

Ersichtlich einfacher ist die Ausgestaltung eines ausgebogenen Abschnittes in der Steuerkurve, und wenn dieser entsprechend dem Vorschlag der Erfindung eine stetige Ableitung hat, d.h. in der Bahn kein Knick vorhanden ist, kann man weiche Bewegungen für die zu wendenden Gegenstände schaffen, insbesondere positive oder negative Beschleunigungen auf einem sehr niedrigen Niveau halten.

Bei der hier genannten ersten bzw. zweiten Position muß es sich nicht zwangsläufig um einen mathematisch exakten Punkt im Verlaufe einer Bewegung oder längs einer Bahn handeln.

Vielmehr kommt es auf einen Bereich an, in welchem eine Packung eine erste Position einnimmt, aus der sie herausbewegt und schließlich in eine zweite Position gebracht wird. Zwischen diesen zwei Positionen ist der erwähnte Linearschlitten durch Antrieb bewegbar, wobei sich dieser Schlitten nicht exakt von der Stelle, in welcher die Packung sich in ihrer ersten Position befindet, zu der zweiten Stelle, in welcher sie um 180° gedreht hat, bewegt, sondern die Bewegung des Linearschlittens ist im Sinne dieser Erfindung zwischen zwei Bereichen vorgesehen, welche den zwei Positionen der Packungen entsprechen. Über mechanische Gestänge kann also die Bahn des beweglichen Linearschlittens durchaus verkürzt oder verlängert sein gegenüber den beiden exakten Positionen der Packung vor und nach dem Wenden.

Die Lehre der vorliegenden Erfindung gibt eine stationäre Kulissenführung mit stetiger Steuerkurve und eine Geradführung vor, längs welcher der angetriebene, bewegliche Linearschlitten geführt werden kann. Gleichzeitig lehrt die Erfindung, daß im Linearschlitten und relativ zu diesem ein Greiferelement bewegbar gelagert wird, welches aufgrund eines bestimmten Steuersignals die Packung ergreifen und loslassen kann. Da das Greiferelement fest mit einer Kurvenrolle verbunden ist, hängt nach der Vorstellung der Erfinder die Lage des Greiferelementes und damit auch der Packung von der Lage der Kurvenrolle ab. Hierbei versteht es sich, daß die Kurvenrolle drehbar ist, auch bei stillstehendem Greiferelement.

Durch die vorstehenden Maßnahmen wird erfindungsgemäß erreicht, daß eine auf dem Zuförderer in einer ersten Position angelieferte Packung (oder mehrere gleichzeitig) von einem Greifelement (oder von mehreren gleichzeitig) ergriffen und ruckfrei mit Hilfe des Linearschlittens in eine andere Stellung gebracht wird. Auf dem Wege von der ersten Stellung, welche der genannten ersten Position entspricht, zu der zweiten oder Endstellung, welche der zweiten Position der Packung (um 180° gegenüber der ersten gewendet) entspricht, erfolgt eine Bewegung der Packung, weil die Greiferelemente durch ihre bewegliche Lagerung mit Hilfe der in der Steuerkurve laufenden Nachlaufrolle in gewünschter Weise bewegt wird.

Entsprechend der Erfindung wird die Steuerkurve mit stetiger Ableitung ausgestaltet und so angelegt, daß die Greiferelemente zunächst die Packung in der ersten Position ergreifen und schließlich in der zweiten Position, in welcher die Packung um 180° aus der ersten gedreht ist, loslassen. Damit ist die Packung zuverlässig und weich geführt und um 180° gewendet. Zerquetschungen etwa schief herunterfallender Packungen sind mit der erfindungsgemäßen Vorrichtung ausgestaltet. Damit ist der Ausschuß einer Packungsherstellungsmaschine erheblich verringert.

Das an der Welle befestigte Greiferelement führt zwar mit dem Linearschlitten vorzugsweise eine lineare Bewegung aus, gleichzeitig oder zeitlich unabhängig davon kann es aber auch eine Drehbewegung ausführen. Die Drehbewegung besorgt übrigens die Wendung der Packung um 180°.

Während dervorstehend als "Linearschlitten" bezeichnete Schlitten auch längs gebogener Kurven geführt werden kann, ist es aber besonders bevorzugt, den Linearschlitten längs einer geraden Bahn zu führen, zu welcher sich die Kulissenführung parallel erstreckt. Diese Parallelerstreckung bedeutet die Erstreckung in einer gebogenen oder ebenen Fläche in solcher Weise, daß gleichwohl die Steuerkurve sich zwischen zwei den genannten zwei Positionen der Packung entsprechenden Punkten ihrer Erstreckung gebogen sein kann. Bei einer gebogenen Wandung, in welcher die stetige Steuerkurve angeordnet ist, kann eine im Raum sich in zwei verschiedene Koordinaten erstreckende, fast gleichmäßige Bewegung erzeugt werden.

Man kann die Bewegungseinrichtung beliebig so führen, daß mechanische Teile, vorzugsweise die Greiferelemente, die Packung in jedem Falle aus einer ersten Position herausnehmen und nach Drehung um 180° auf einen Abförderer in einer zweiten Position absetzen, während der Zuförderer und der Abförderer keineswegs geradlinig, parallel zueinander oder auch auf gleicher Höhe angeordnet sein müssen. Hierdurch zeigt sich die vorteilhafte Vielseitigkeit der Wendevorrichtung gemäß der Erfindung.

Durch die Bemessung des Rollenarmes erstreckt sich dieser also zwischen der Kurvenrolle an seinem freien Ende einerseits und der in dem Linearschlitten gelagerten Welle an seinem anderen, inneren Ende andererseits. Das Zentrum der Welle im Linearschlitten und das Zentrum der Kurvenrolle geben zwei Punkte vor, welche die Länge des Rollenarmes definieren. Die Punkte auf der Steuerkurve sind so gelegt, daß sich zwischen den zwei den beiden Positionen der Packung entsprechenden Punkten teilweise eine gerade und teilweise eine gekrümmte Linie ergibt. Der Bereich der gekrümmten Linie, welcher sich von der geraden Linie zwischen den beiden Punkten im größten Abstand befindet ist so lang wie der Rollenarm. Ist nur ein solcher Bereich im Abstand von der geraden Verbindungslinie zwischen den beiden Punkten vorhanden, dann verläuft die Kurvenrolle derart, daß der Rollenarm mindestens einmal um 90° gegenüber seiner Ausgangslage gedreht wird. Sorgt man nun dafür, daß der Rollenarm nach Durchlauf dieses von der geraden Linie entfernten Bereiches zwar wieder in eine Lage parallel zur Ausgangslage zu liegen kommt, wohlgemerkt aber in entgegengesetzter Richtung zu seiner ursprünglichen Lage, dann hat man eine 180°-Drehung des Rollenarmes, damit des Greiferelementes und damit auch der Positionierung der Packung erreicht.

Durch die Ausgestaltung, Anordnung und den Antrieb des Linearschlittens, welcher die Welle mit dem Greiferelement und damit auch den Rollenarm sozusagen nachschleppt, wird das gewünschte Mittel erreicht, daß der Rollenarm zuerst beispielsweise seine Kurvenrolle in Bewegungsrichtung vor sich herschiebt und nach Durchlaufen des betreffenden Bereiches im kürzesten Abstand von der geraden Linie durch die beiden Punkte hinter sich herzieht. Damit ist die Drehung des Rollenarmes um 180° und damit die Drehung des Greiferelementes und auch das Wenden der Packung erreicht.

Besonders robust und einfach wird die Wendevorrichtung gemäß der Erfindung dann, wenn die Geradführung des Linearschlittens wenigstens eine Führungsstange ist. Besonders bevorzugt ist es dabei, zwei gerade Führungsstangen parallel im Abstand nebeneinander anzuordnen und den Linearschlitten mit beiden Stangen zu führen. Der Fachmann erkennt aber, daß der Linearschlitten auf seiner Bahn ebenso durch andere Einrichtungen geführt bzw. in der gleichen Position gehalten werden kann, in welcher er an der erwähnten wenigstens einen Führungsstange gehalten ist.

Es sei nochmals darauf hingewiesen, daß die Führungsstange sicherlich auch gebogen sein kann, bevorzugt aber gerade ausgestaltet ist. Im Falle der geradlinigen Ausbildung der Führungsstnge oder der Führungsstangen erstrecken diese sich parallel zu der Linie zwischen den zwei den beiden Positionen der Packung zu Anfang und zu Ende entsprechenden Punkten. Dem widerspricht nicht, daß im Verlaufe der Bewegung des Linearschlittens die Welle in diesem - durch die Steuerkurve geführt - eine Drehbewegung von 180° zwischen der Anfangsstellung und der Endstellung vollführt.

Vorteilhaft ist es erfindungsgemäß besonders, wenn der Linearschlitten an einem hin- und herbewegbaren Riemen befestigt ist. Die Bewegungseinrichtung kann zwar auch durch einen Kolben eine hin- und hergebende Bewegung des Linearschlittens vorsehen, dann aber wird man vorzugsweise nur geradlinige Führungsstangen einsetzen. Robuster, zuverlässiger und vielseitiger ist aber eine Bewegungseinrichtung mit einem endlosen, um zwei Umlenkräder gelegten Riemen. In der Praxis hat sich hier ein Zahnriemen an sich bekannter Art besonders bewährt. Dabei ist es zweckmäßig, wenn erfindungsgemäß der Linearschlitten nur aneinem Trum zwischen zwei Umlenkrädern befestigt ist. Eine Anbringung des Schlittens auf beiden gegenüberliegenden Trums ist unsinnig, weil sich diese in entgegengesetzten Richtungen hin- und herbewegen.

Bei weiterer vorteilhafter Ausgestaltung der Erfindung sind zwei Greiferelemente nebeneinander mit einem einzigen Rollenarm verbunden und weisen jeweils beweglich angetriebene Greifbacken auf. Auf diese Weise wird die Wendevorrichtung geeignet für einen doppelten Arbeitstakt, wenngleich die Bewegung der Greiferelemente nach wie vor durch einen einzigen Rollenarm gesteuert wird. Die Bewegung der Greifbacken auf die jeweilige Packung zu bzw. von dieser fort erfolgt zweckmäßigerweise pneumatisch, wenngleich hier auch andere mechanische, hydraulische oder elektrische Einrichtungen als Steuerelemente verwendet werden können.

Günstig ist es gemäß der Erfindung ferner, wenn die Drehachse des zu wendenden Gegenstandes sowohl durch die Welle im Linearschlitten als auch durch das Zentrum des zu wendenden Gegenstandes verläuft. Versuche haben gezeigt, daß das Zentrum des zu wendenden Gegenstandes in zweckmäßiger Weise mit seinem Schwerpunkt zusammenfällt. Dies ist besonders bei Flüssigkeitspackungen, sogenannten Weichpackungen, zweckmäßig, weil diese dann den geringsten Beanspruchungen ausgesetzt sind.

Vorteilhaft ist es weiterhin, wenn erfindungsgemäß im Bereich des Zuförderers eine Überwachungseinrichtung angeordnet ist zur Vorgabe von Steuersignalen und zur Betätigung der Greifbacken des Greiferelementes sowie zum Abwurf defekter Packungen an einer Abwurfposition auf der Steuerkurve. Insbesondere bei den eingangs beschriebenen Packungsarten mit tubusförmigen Seitenwänden und einem durch Faltung von Wandfeldern in Verlängerung des Tubus erzeugten Faltboden kann es vorkommen, daß durch die Faltung entstehende Dreiecklappen beim Verschließen der gefüllten Packung nicht einwandfrei umgefaltet und auf der betreffenden Wandung festgeheftet sind. Vielmehr kommt es im Verlaufe der langzeitigen Massenproduktion hin und wieder vor, daß die Faltung nicht exakt ist und z.B. ein Dreiecklappen unvorschriftsmäßig zur Seite heraussteht. Dann erfaßt die Überwachungsvorrichtung, beispielsweise mit Hilfe einer Lichtschranke, den Defekt des Bodens und damit die Ausschußpackung. Die Überwachungseinrichtung gibt in einem solchen Falle ein elektrisches, pneumatisches oder mechanisches Steuersignal an die Greifbacken, so daß diese die Packung auswerfen. Das Auswerfen der defekten Packung kann an beliebiger Stelle zwischen ihrer ersten und der um 180° zu dieser gewendeten zweiten Position erfolgen. Beispielsweise könnte das Greiferelement die Packung selbst oder mit Hilfe eines Auswerfers sogleich am Zuförderer beiseite schieben. Die Packung kann aber auch im Verlaufe der Wendebewegung ausgeworfen werden; und schließlich könnte die Packung anstelle auf den Abförderer vom Greiferelemente beiseite geworfen werden.

Besonders zweckmäßig ist es aber, wenn die defekte Packung an einer geeignet ausgewählten Stelle während der Wendebewegung abgeworfen wird. Hier hat man vorzugsweise eine Abwurfposition ausgewählt, an welcher die Packung oder die Packungen durch die Wendebewegung einen gewissen Schwung bzw. eine hohe Bewegungsenergie erhalten hat/haben, damit man einen guten Abwurf bekommt.

Weitere Vorteile, vorteilhafte Merkmale und Anwendungsmöglichkeiten der vorliegenden Erfindung ergeben sich aus der folgenden Beschreibung einer bevorzugten Ausführungsform in Verbindung mit den Zeichnungen. Es zeigen:
- Figur 1: teilweise abgeschnitten und schematisiert eine Seitenansicht der Wendevorrichtung, die im Vertikalschnitt gezeigt ist, d.h. die Zeichenebene verläuft durch das Lot,
- Figur 2: eine Draufsicht auf die Wendevorrichtung, wenn man in Figur 1 von oben nach unten blickt,
- Figur 3: eine Einzelheit aus Figur 2, nämlich zwei Greiferelemente und ihre Anbringung am Rollenarm mit Lagerung im Linearschlitten,
- Figur 4: eine Schnittansicht entlang der Linie IV-IV der Figur 2 und
- Figur 5: schematisch und herausgegriffen die Kulissenführung mit der Steuerkurve für die Positionierung des Greiferelementes bzw. der Packung.

Auf dem Boden 1 ist ein allgemein mit 2 bezeichneter Rahmen befestigt, an dem über zwei Standsäulen 3, 3′ ein mittels Handrad 4 in der Höhe relativ zum Boden 1 verstellbares Gehäuse 5 getragen wird.

Auf einem Zuförderer 6 mit vertikal in Richtung des Pfeiles 7 bewegbarem Auswerfer 8 befindet sich eine abgebrochen und gestrichelt gezeigte Packung 9 in einer ersten Position I, bei welcher ihr Deckel 10 unten, d.h. auf dem Auswerfer 8 liegt, während in Richtung des Lotes oben der Faltboden 11 angeordnet ist.

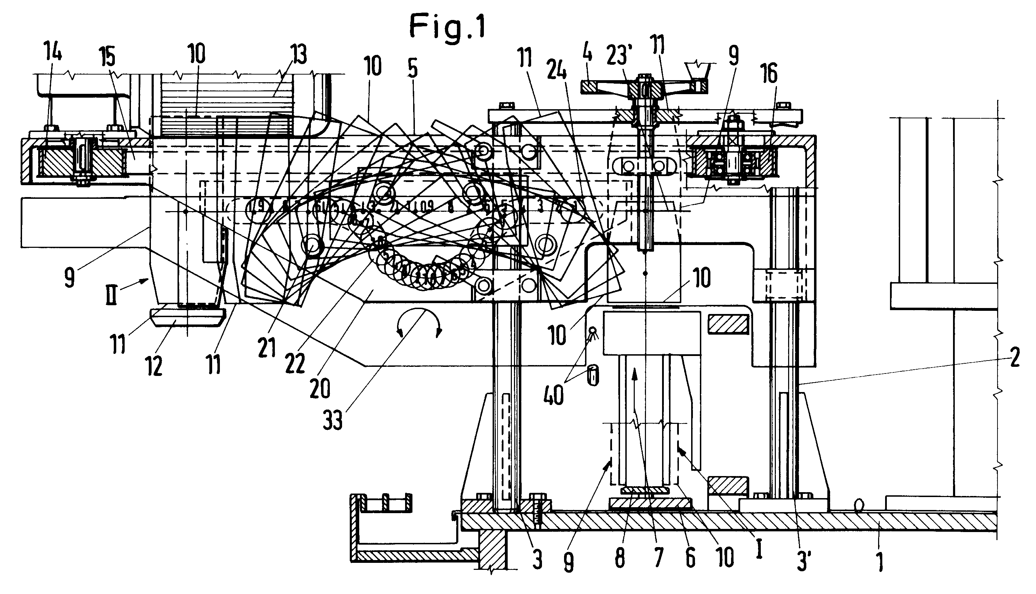

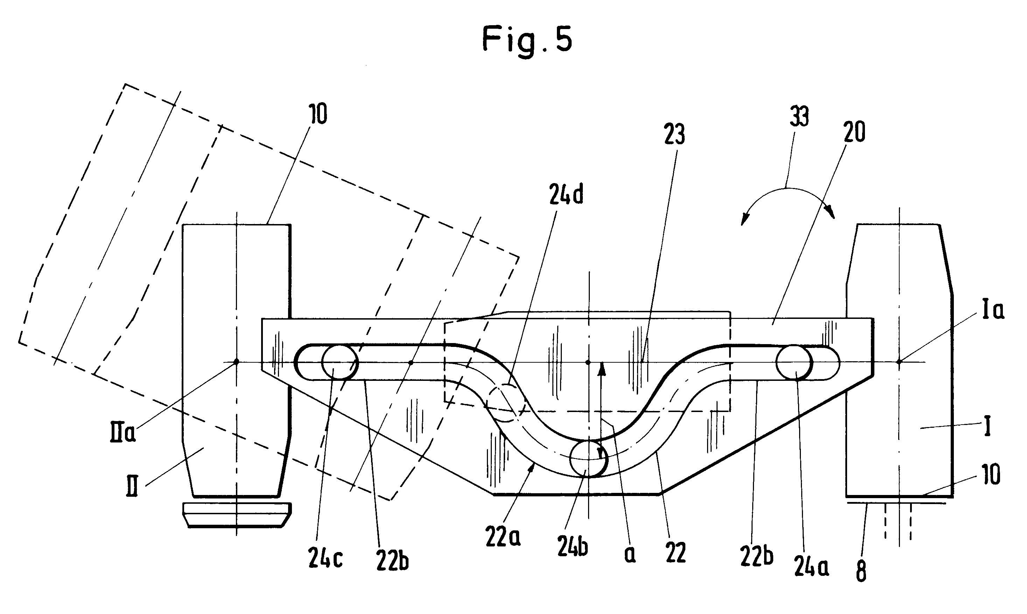

Aus der Position I, die in den Figuren 1, 2 und 5 rechts gezeigt ist, soll die Packung 9 um eine Achse in Blickrichtung des Betrachters der Figuren 1 und 5, welche senkrecht auf der Papierebene steht, um 180° in eine Position II gewendet werden, die in den Figuren 1, 2 und 5 links zu sehen ist. In dieser Position II liegt der Faltboden 11 unten, während sich der Deckel 10 in gewünschter Weise oben befindet. Mit den nun "aufrecht" stehenden Packungen 9 in Position II auf dem Abförderer 12 kann der Transport in die Vorrichtung zur Herstellung von Sammelgebinden gefördert werden.

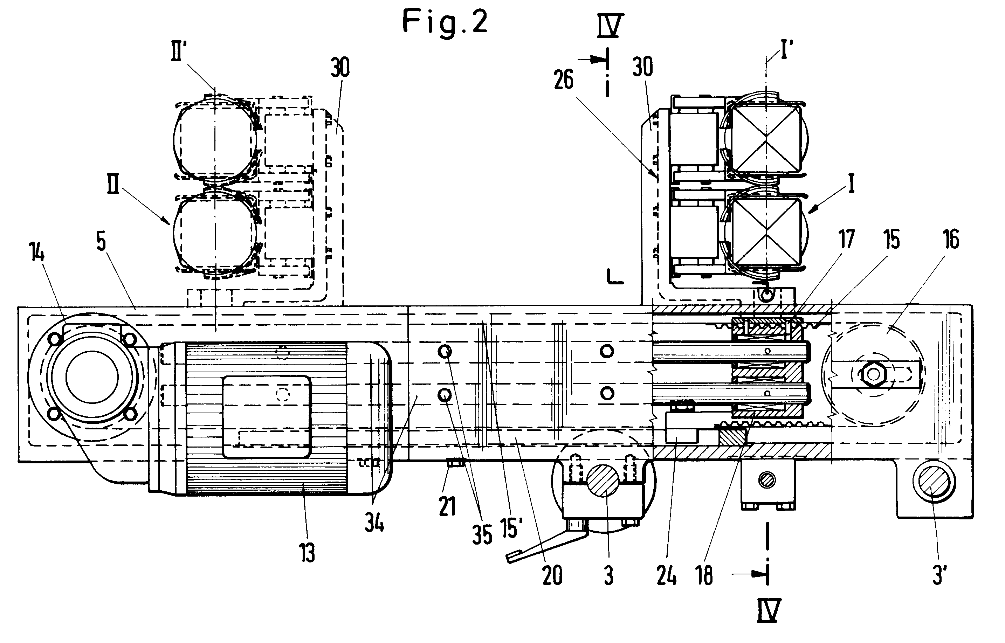

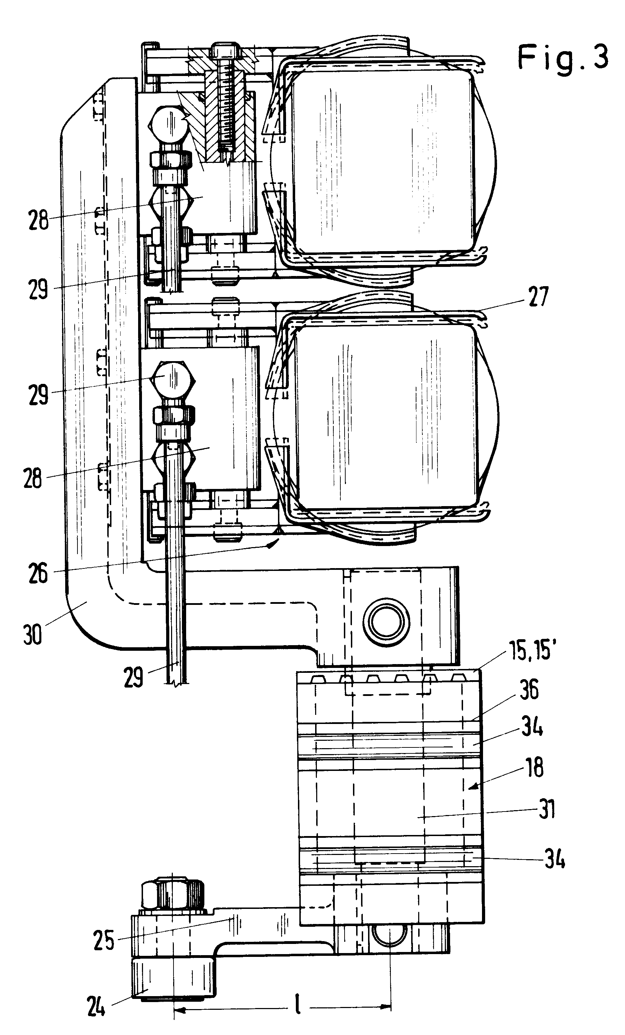

Auf einer Seite des Gehäuses 5 ist ein Elektromotor 13 für den Antrieb des ersten Umlenkrades 14 angebracht, um welches ein endloser Zahnriemen 15 gelegt ist, der auf der gegenüberliegenden Seite um das andere Umlenkrad 16 geschlungen ist. Die Zähne dieses Zahnriemens 15 ragen dabei ersichtlich nach innen, wie man in den Figuren 2 und 3 sieht. An einer Stelle ist über Bolzen 17 ein Linearschlitten 18 am oberen bzw. hinteren Trum 15′ befestigt, der sich von einem Punkt I′ zu einem Punkt II′ hin- und herbewegen kann, wobei die beiden Punkte I′ und II′ besonders deutlich in Figur 2 durch Linien dargestellt sind. Diese Punkte I′ und II′ entsprechen der ersten Position I bzw. der zweiten Position II der Packung 9 zu Anfang und zu Ende des Wendevorganges.

Nun ist ferner die Kulissenführung 20 über Schrauben 21 stationär am Rahmen 2 befestigt. Diese besteht aus einer ebenen dicken Metallplatte, in welcher eine Steuerkurve 22 eingefräst ist. Diese ist besonders deutlich in Figur 5 herausgezeichnet. Sie liegt teilweise auf einer geraden Linie 23, die man sich als kürzeste Verbindung zwischen zwei Punkten Ia und IIa gelegt denken kann, und weist wenigstens einen gebogenen Abschnitt 22a auf. Es sei an dieser Stelle darauf hingewiesen, daß die Punkte Ia und IIa zwar den Positionen I und II der Packung vor und nach dem Wendeprozeß entsprechen, nicht in jedem Falle aber mit der Position übereinstimmen müssen, wie in Figur 5 beim Sonderfall gezeigt ist. Bei der hier gezeigten Ausführungsform bzw. diesem Sonderfall fallen diese Punkte Ia und IIa auf die Linien I′ und II′ in Figur 2, d.h. die Endmittelpunkte der Bewegung des Linearschlittens 18.

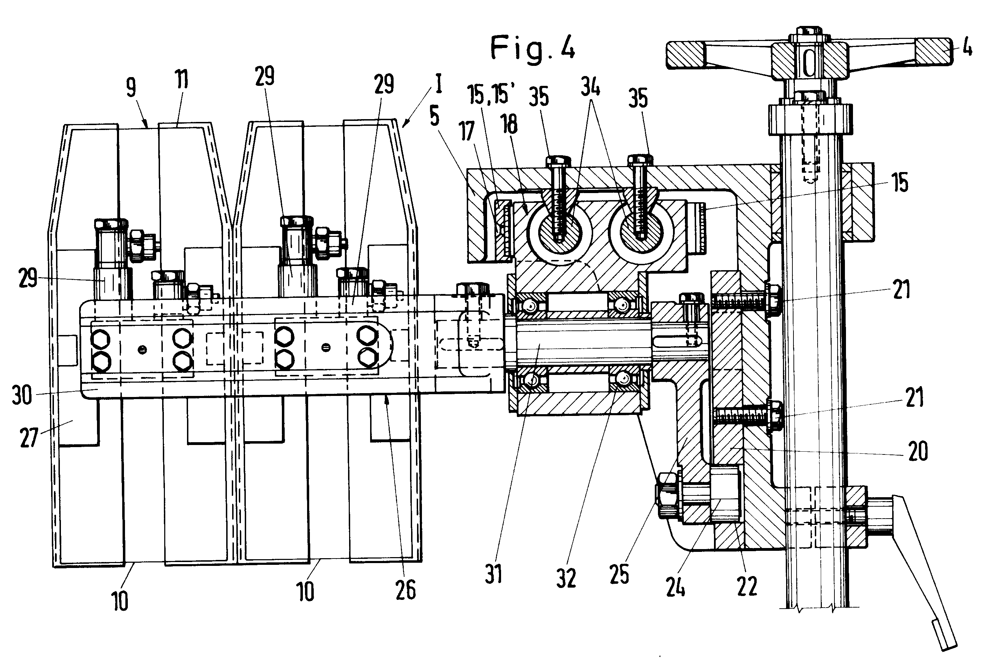

In der Steuerkurve 22 wird eine Kurvenrolle 24 geführt, welche drehbar von einem Rollenarm 25 getragen ist. Man erkennt diesen Rollenarm und seine Länge 1 besonders aus Figur 3, durch die Senkrechtstellung aber auch aus Figur 4. Hierbei muß erwähnt werden, daß der untere Teil der Schnittlinie IV-IV in Figur 2 eigentlich in der Mitte zwischen den Punkten I′ und II′ der Bewegungsbahn des Linearschlittens 18 angenommen werden müßte. Dies versteht sich aus Figur 5, denn dort sind vier verschiedene Stellungen 24a, 24b, 24c und 24d der Kurvenrolle 24 gezeigt. In den Positionen 24a und 24c liegt der Rollenarm 25 horizontal, d.h. im wesentlichen in der Papierebene der Figur 2 bzw. parallel darüber oder darunter; bzw. in Position 24b wie in Figur 4 gezeigt in der vertikalen Stellung.

Zu der beschriebenen Bewegungseinrichtung gehört außer dem Linearschlitten 18 und dem Riemen 15, der Kulissenführung 20, Steuerkurve 22 auch das allgemein mit 26 bezeichnete Greiferelement. Die wesentlichen Teile der in Figur 3 besonders deutlich gezeigten und paarweise angeordneten Greiferelemente 26 sind die Greifbacken 27, die über Pneumatikzylinder 28 und Leitungsanschlüsse 29 bewegbar zwischen der in Figur 3 mit ausgezogenen Linien gezeigten Löseposition und der in Figur 3 mit gestrichelten Linien gezeigten Klemmposition bewegbar angetrieben sind. Die Halterungen für die Greifbacken 27 und den Pneumatikantrieb 28, 29 sind durch in Draufsicht L-förmige Stützen 30 (Figur 3) gebildet. Diese Stützen sind fest mit einer Welle 31 verbunden, welche gemäß besonders deutlicher Darstellung der Figur 4 durch den Linearschlitten 18 hindurchgreift und auf der der Stütze 30 gegenüberliegenden Seite fest mit dem Rollenarm 25 verbunden ist. Durch die Kugellager 32 (Figur 4) ist die Welle 31 des Greiferelementes 26 gegenüber dem Linearschlitten 18 in Richtung des Doppelpfeiles 33 in den Figuren 1 und 5 drehbar. Zusammen mit der Drehung der Welle 31 dreht sich auch der Rollenarm 25, damit drehen sich auch die Stützen 30 und mithin die Greiferelemente 26.

Der Linearschlitten 18 ist im Schnitt in Figur 4 gezeigt und trägt in seinem unteren Teil die Welle 31, wie vorstehend beschrieben, und wird selbst in seinem oberen Teil, wo er auch über den Zahnriemen 15 im Bereich der Bolzen 17 angetrieben wird, von zwei im Abstand zueinander und parallel zueinander angeordneten Führungsstangen 34 getragen. Die Führungsstangen sind über Schrauben 35, die sich durch Längsschlitze 36 im Linearschlitten 18 erstrecken, am Gehäuse 5 befestigt. Auf diese Weise haltert das nach unten offene, U-förmige Gehäuse 5 die Führungsstangen 34, und gleichwohl kann sich der Linearschlitten 18 innerhalb dieses U-förmigen Gehäuses 5 längs der Führungsstangen 34 bewegen.

Die stationär an dem einen vertikal verlängerten Schenkel des U-förmigen Gehäuses 5 mittels der Schrauben 21 befestigte Kulissenführung 20 ist also eine starre ebene Platte, die sich im wesentlichen zwischen den Positionen I und II der Packungen 9 erstreckt. In Figur 5 sieht man den Verlauf der Steuerkurve 22, die an den beiden Enden einen linearen Abschnitt 22b und dazwischen einen gebogenen Abschnitt 22a derart aufweist, daß der in Figur 5 mit 24b bezeichnete Bereich von der geraden Linie 23 einen größten Abstand a hat. Es war oben schon ausgeführt, daß diese gerade Linie 23 durch zwei Punkte Ia und IIa gelegt ist, welche den beiden Positionen I und II der Packung 9 entsprechen. Ist der Abstand a (Figur 5) gleich der Länge 1 des Rollenarmes 25, dann muß zwangsläufig der Rollenarm 25 in der Lage 24b der Kurvenrolle 24 im Lot bzw. vertikal bzw. senkrecht zur Linie 23 liegen, wie man bei der Betrachtung der nachfolgend beschriebenen Bewegung insbesondere anhand Figur 5 sogleich erkennt.

Durch die nun beschriebene Bewegung im Betrieb der Wendevorrichtung wird die Funktion erläutert.

Eine auf dem Zuförderer 6 angelieferte Packung 9, die verschlossen und mit Flüssigkeit gefüllt ist, wird vom Auswerfer 8 in Richtung des Pfeiles 7 aus der in Figur 1 unten gestrichelten Position in die oben teilweise gestrichelte Position geschoben.

Sollte ein Dreiecklappen bei einer defekten Packung herausstehen, so wird dies sogleich von der Überwachungseinrichtung 40 erkannt, die einen Steuerbefehl an das Greiferelement 26 zur Lösung der Greifbacken 27 gibt. Dies erfolgt an der nachfolgend noch beschriebenen Abwurfposition 24d (Figur 5).

Alle einwandfrei gefüllten und verschlossenen Packungen, die nun auf das oberste Niveau entsprechend der Linie 23′ (Figur 1) angehoben sind, werden durch entsprechende Ansteuerung von den Greiferelementen 26 ergriffen und über die Greibacken 27 festgeklemmt. Hier befindet sich das jeweilige Greiferelement 26 in der in den Figuren 1 und 2 gezeigten rechten Position.

Der Linearschlitten 18 wird nun durch Einschalten des Elektromotors 13 mittels des Zahnriemens 15 aus der in den Figuren 1 und 2 rechten Position in die in Figur 2 gestrichelt gezeigte linke Position gefördert. Zusammen mit dem Linearschlitten 18 bewegt sich also parallel zu den Führungsstangen 34 auch die Stütze 30 mit den Greiferelementen 26.

Schon aus Figur 2 sieht man, daß eine Wendung oder Drehung der Packungen 9 um 180° stattgefunden haben muß, denn in der rechten Position liegt die Stütze 30 links, und in der linken Position befindet sie sich auf der rechten Seite. Damit ist die jeweilige Packung 9 aus der verkehrten Position I in die richtige Position II mit dem Deckel nach oben gewendet worden.

Dieses Wenden wird durch die Steuerkurve 22 veranlaßt.

Aus Figur 5 erkennt man, daß die Kurvenrolle 24 bei Verlassen der Anfangsposition 24a zunächst ein Stück linear so geführt wird, daß der Linearschlitten 18, betrachtet man Figur 2, den Rollenarm 25 in im wesentlichen horizontaler Position sozusagen vor sich herschiebt.

Geht die Steuerkurve 22 nun in ihren gebogenen Abschnitt 22a über, während sich der Linearschlitten 18 bei der Darstellung der Figuren 1, 2 und 5 von rechts nach links bewegt, dann beginnt sich der Rollenarm 25 im Gegenuhrzeigersinn gemäß Doppelpfeil 33 zu drehen. Damit aber dreht sich auch die Längsmittelachse der in den Greiferelementen 26 befindlichen Packungen 9. Diesen Übergang der Drehung sieht man deutlich anhand der Figur 1, wo die einzelnen Zwischenpositionen der gerade in Wendung befindlichen Packung wiedergegeben ist.

Hat die Kurvenrolle 24 in Figur 5 die Position 24b erreicht, dann steht der Rollenarm 25 vertikal nach unten, wobei der Bereich 24b einen Abstand a von der Linie 23 so hat, daß er praktisch den Schubantrieb vom Linearschlitten 18 verliert. Währenddessen läuft der Linearschlitten aber weiter nach links in Richtung auf die Position II zu, so daß nach Verlassen der Position 24b die Kurvenrolle 24 nun vom Rollenarm 25 mitgeschleppt wird. Mit anderen Worten dreht sich der Rollenarm 25 auch zwischen der Position 24b und 24c der Kurvenrolle 24 weiter im Gegenuhrzeigersinn gemäß gebogenem Doppelpfeil 33, so daß die Packung, wie man in Figur 1 deutlich sieht, immer mehr die richtige Position II annimmt. Schließlich wird sie auf dem Abförderer 12 abgestellt, weil die Greifbacken 27 in der Position II die Packung 9 loslassen.

Sollte inzwischen eine fehlerhafte Packung mit abstehendem Dreiecklappen von der Überwachungseinrichtung 40 erkannt worden sein und von den Greiferelementen 26 gefördert worden sein, dann erhalten die Greifbacken 27 spätestens an der in Figur 5 mit 24d bezeichneten Abwurfposition das Signal zum Loslassen der Packungen, so daß sie hier mit Schwung abgeworfen werden.

## Patentansprüche

1. Vorrichtung zum Wenden eines Gegenstandes, insbesondere einer Packung (9), zwischen einer ersten Position (I) auf einem Zuförderer (6) und einer zweiten Position (II) auf einem Abförderer (12), wobei ein am Boden (1) befestigter Rahmen (2) zur Halterung einer mit einem Antriebsmotor (13) versehenen Bewegungseinrichtung vorgesehen ist, die einen zwischen den zwei Positionen (I, II) angetriebenen, beweglichen Linearschlitten (18) und eine Kulissenführung (20) mit Steuerkurve (22) aufweist, und wobei ein Greiferelement (26) mittels einer Welle (31) drehbar im Linearschlitten (18) gelagert und fest mit einer in der Steuerkurve (22, 22a) geführten Kurvenrolle (24) verbunden ist, wobei die sich zwischen den zwei Positionen (Ia, IIa) erstreckende Steuerkurve (22) wenigstens einen ausgebogenen Abschnitt (22a) zur Vorgabe einer stetigen Kurve für ein kontinuierliches Wenden der Packung (9) aufweist, die Kurvenrolle (24) drehbar an einem Rollenarm (25) gelagert ist, der fest mit der am Greiferelement (26) angebrachten Welle (31) verbunden ist, und wobei der ausgebogene Abschnitt (22a) der stetigen Steuerkurve (22) einen Bereich (24b) hat, der von einer durch zwei den beiden Positionen (I, II) entsprechende Punkte (Ia, IIa) gelegten, geraden Linie (23) einen längsten Abstand (a) hat, welcher im wesentlichen gleich der Länge (I) des Rollenarmes (25) ist, dadurch gekennzeichnet, daß der Linearschlitten (18) eine von der Steuerkurve (22) für die Kurvenrolle (24) unabhängige Geradführung (34) aufweist und daß der ausgebogene Abschnitt (22a) der Steuerkurve (22) eine im wesentlichen stetige Ableitung hat und im Bereich (24b) mit dem längsten Abstand (a) eine Tangente aufweist, die parallel zur Verbindungslinie (23) zwischen Anfangs- (24a) und Endposition (24c) des Linearschlittens (18) verläuft.

2. Vorrichtung nach Anspruch 1, dadurch gekennzeichnet, daß die Geradführung (34) des Linearschlittens (18) wenigstens eine Führungsstange (34) ist.

3. Vorrichtung nach Anspruch 1 oder 2, dadurch gekennzeichnet, daß der Linearschlitten (18) an einem hin- und herbewegbaren Riemen (15) befestigt ist.

4. Vorrichtung nach einem der Ansprüche 1 bis 3, dadurch gekennzeichnet, daß zwei Greiferelemente (26) nebeneinander mit einem einzigen Rollenarm (25) verbunden sind und jeweils beweglich angetriebene Greifbacken (27) aufweisen (Figur 3).

5. Vorrichtung nach einem der Ansprüche 1 bis 4, dadurch gekennzeichnet, daß die Drehachse des zu wendenden Gegenstandes (9) sowohl durch die Drehachse (31) im Linearschlitten (18) als auch durch das Zentrum des zu wendenden Gegenstandes (9) verläuft.

6. Vorrichtung nach einem der Ansprüche 1 bis 5, dadurch gekennzeichnet, daß im Bereich des Zuförderers (6) eine Überwachungseinrichtung (40) angeordnet ist zur Vorgabe von Steuersignalen zur Betätigung der Greifbacken (27) des Greiferelementes (26) und zum Abwurf defekter Packungen (9) an einer Abwurfposition (24d) auf der Steuerkurve (22) (Figur 5).

## Claims

1. A device for turning over an object, in particular a package (9), between a first position (I) on a supply conveyer (6) and a second position (II) on a removal conveyer (12), wherein a frame (2) fixed to the base (1) is provided to hold a movement device provided with a drive motor (13), the movement device having a movable linear sliding carriage (18) which is driven between the two positions (I, II) and a connecting link guide (20) with control cam (22), and wherein a gripper element (26) is mounted rotatably in the linear sliding carriage (18) by means of a shaft (31) and is fixedly connected to a cam roller (24) guided in the control cam (22, 22a), wherein the control cam (22) extending between the two positions (Ia, IIa) has at least one bent out section (22a) to define a constant curve for continuously turning over the package (9), the cam roller (24) is rotatably mounted to a roller arm (25) which is fixedly connected to the shaft (31) arranged on the gripper element (26), and wherein the bent out section (22a) of the permanent control cam (22) has a legion (24b) which is at a very large distance (a) from a straight line (23) which is placed by two points (Ia, IIa) corresponding to the two positions (I, II), this spacing being substantially equal to the length (I) of the roller arm (25), characterised in that the linear sliding carriage (18) has a slide bar (34) which is independent of the control cam (22) for the cam roller (24), and that the bent out section (22a) of the control cam (22) has a substantially steady derivation, and in the region (24b) which is the greatest distance (a) away it has a tangent which extends parallel to the connecting line (23) between the starting- (24a) and end position (24c) of the linear sliding carriage (18).

2. A device according to Claim 1, characterised in that the slide bar (34) of the linear sliding carriage (18) is at least one guide rod (34).

3. A device according to Claim 1 or Claim 2, characterised in that the linear sliding carriage (18) is fixed to a belt (15) which moves backwards and forwards.

4. A device according to one of Claims 1 to 3, characterised in that two gripper elements (26) are connected adjacently to a single roller arm (25), and each has movably driven gripping wedges (27) (Figure 3).

5. A device according to one of Claims 1 to 4, characterised in that the axis of rotation of the object (9) to be turned over extends both through the axis of rotation (31) in the linear sliding carriage (18) and also through the centre of the object (9) to be turned over.

6. A device according to one of Claims 1 to 5, characterised in that a monitoring device (40) is arranged in the region of the supply conveyer (6) for the purpose of giving control signals for the actuation of gripping wedges (27) of the gripper element (26) and for rejecting defective packages (9) at a rejection position (24d) on the control cam (22)
(Figure 5).

## Revendications

1. Dispositif pour le retournement d'un objet, en particulier un emballage (9), entre une première position (I) sur un convoyeur d'amenée (6) et une deuxième position (II) sur un convoyeur d'évacuation (12), avec un cadre (2) fixé sur le fond (1 ) pour supporter un dispositif d'actionnement muni d'un moteur d'entraînement (13), dispositif qui présente un chariot linéaire mobile entraîné entre les deux positions (I, II) et un guidage à coulisse (20) à came de commande (22), un élément préhenseur (26) étant monté de manière rotative au moyen d'un arbre (31) dans le chariot linéaire (18) et relié de manière fixe, à un rouleau de came (24) guidé dans la came de commande (22, 22a), ladite came (22) qui s'étend entre les deux positions (Ia, IIa) présentant au moins une section courbe (22a) pour la mise en place d'une courbe permanente permettant un retournement continu de l'emballage (9), le rouleau (24) étant monté de manière rotative sur un bras (25) qui est relié de manière fixe à l'arbre (31) fixé sur l'élément préhenseur (26), ladite section courbe (22a) de la came de commande permanente (22) présentant une zone (24b) qui est placée à une distance maximale d'une ligne droite (23) passant par deux points (Ia, IIa) correspondant aux deux positions (I, II), cette distance maximale (a) étant sensiblement égale à la longueur (1) du bras (25), caractérisé en ce que le chariot linéaire (18) présente un guidage rectiligne (34) pour le rouleau (24) indépendant de la came (22) et en ce que la section courbe (22a) de la came (22) présente un tracé sensiblement constant, et dans la zone (24b) de distance maximale (a), une tangente qui s'étend parallèlement à la ligne de liaison (23) entre la position initiale (24) et la position finale (24c) du chariot linéaire (18).

2. Dispositif selon la revendication 1, caractérisé en ce que le guidage rectiligne (34) du chariot linéaire (18) est au moins une tige de guidage (34).

3. Dispositif selon les revendications 1 ou 2, caractérisé en ce que le chariot linéaire (18) est fixé sur une courroie (15) susceptible d'être animée d'un mouvement de va-et-vient.

4. Dispositif selon l'une des revendications 1 à 3, caractérisé en ce que deux éléments préhenseurs (26) sont reliés côte à côte à un seul bras de rouleau (25) et présentent chacun des mâchoires de préhension (27) mobiles sous l'effet d'un moteur (figure 3).

5. Dispositif selon l'une des revendications 1 à 4, caractérisé en ce que l'axe de rotation de l'objet (9) à retourner, passe, d'une part, par l'axe de rotation (31) dans le chariot linéaire (18) et, d'autre part, par le centre de l'objet (9) à retourner.

6. Dispositif selon l'une des revendications 1 à 5, caractérisé en ce que dans la zone du convoyeur d'amenée (6) est disposé un dispositif de surveillance (40) pour la programmation de signaux de commande destinés à actionner les mâchoires de préhension (27) de l'élément de préhension (26) et à éjecter les emballages (9) défectueux, en position d'éjection (24d), placés sur la came de commande (22) (figure 5).
